# EUROPÄISCHE PATENTANMELDUNG

(11) **EP 1 300 926 A2**
(43) Veröffentlichungstag der Anmeldung: **09.04.2003**
(21) Anmeldenummer: 02021953.1
(22) Anmeldetag: 30.09.2002
(51) Int. Cl.: H02K 7/18, F02D 11/04, F02N 11/04

(54) **Startvorrichtung**

(30) Priorität: 02.10.2001 DE 10148670
(71) Anmelder: ROBERT BOSCH GMBH, 70442 Stuttgart (DE)
(72) Erfinder: Schustek, Siegfried, 71254 Ditzingen (DE)

(57) **Zusammenfassung**

Es wird eine Startvorrichtung (10) zum Andrehen von Brennkraftmaschinen mit einem Startermotor (13), gebildet aus einem Stator (22) und einem Rotor (28) und einem ersten Drehmomentübertragungsteil, insbesondere einem Sonnenrad eines Planetengetriebes, das mit dem Startermotor verbunden ist, vorgeschlagen. Das erste Drehmomentübertragungsteil (76) dient zum Übertragen eines Drehmoments auf mindestens ein nachgeordnetes Übertragungselement (79). Zwischen dem Rotor (28) und dem ersten Drehmomentübertragungsteil (76) ist zumindest ein federndes Element (70) angeordnet.

## Beschreibung

### Stand der Technik

Die Erfindung geht aus von einer Startvorrichtung nach der Gattung des Anspruchs 1.

Aus der deutschen Patentanmeldung DE 1 99 27 905 A1 ist eine Startvorrichtung bekannt, bei der zwischen einem Startermotor und einem Ritzel zum Andrehen der Brennkraftmaschine ein Vorgelege-Getriebe angeordnet ist. Dieses Vorgelege-Getriebe ist als Planetengetriebe ausgeführt. Das Planetengetriebe ist am Umfang mittels Dämpfungselementen elastisch gelagert, so dass sich eine Verringerung der Stoßbelastung des Planetengetriebes ergibt. Damit ergibt sich auch eine Verringerung des Startergeräusches.

Nachteil dieser Dämpfungselemente ist, dass sich deren Federkonstante mit deren Kompression stark progressiv erhöht. Dies führt zu hohen Belastungen des Triebstrangs beziehungsweise des Planetengetriebes sowie des Startermotors.

### Vorteile der Erfindung

Die erfindungsgemäße Startvorrichtung mit den Merkmalen des Hauptanspruchs hat den Vorteil, dass die Elastizität des Antriebsstrangs der Startvorrichtung erhöht und dadurch die mechanische Belastung des Antriebsstrangs verringert wird.

Durch die in den Unteransprüchen aufgeführten Merkmale sind weitere vorteilhafte Ausgestaltungen der Vorrichtung nach dem Hauptanspruch möglich.

Eine platzsparende Anordnung des federnden Elements ist in einer Nabe zwischen dem Startermotor und dem ersten Drehmomentübertragungsteil.

Die Nabe wird in vorteilhafter Weise durch eine hohle Rotorwelle gebildet, wodurch ein an sich bisher ungenutzter Raum genutzt wird. Andererseits kann auch ein Nabenteil in die Rotorwelle eingeschoben sein, das in vorteilhafter Weise vorgefertigt werden kann.

Ist die Rotorwelle als eine Hohlwelle ausgebildet, kann in das ausgesparte Volumen das erfindungsgemäße federnde Element untergebracht werden. Dies ist insbesondere dann von Vorteil, wenn als federndes Element ein in der hohlen Welle untergebrachter Torsionsstab verwendet wird, durch den somit die Baulänge des Startermotors nicht verlängert wird.

Verbindet man einen Torsionsstab mit einem Ritzel, so dass sich eine Ritzelwelle ergibt, hat dies den Vorteil, dass durch das Einstecken einer jeweils abgestimmten Ritzelwelle die Ankerausführungen beziehungsweise deren Gesamtanzahl an Varianten verringert wird. In Kombination mit einem eigengelagerten Startermotor, das heißt, führt man den Startermotor als eigenständige Einheit aus, bei der die Ritzelwelle beziehungsweise der Anker in einem eigenständigen Startermotorgehäuse gelagert ist, ist darüber hinaus eine frühzeitige Prüfung eines einzelnen Startermotors möglich und dadurch auch eine frühzeitige Erkennung möglicher Fehler.

Ist das zumindest eine federnde Element im Wesentlichen ringförmig ausgebildet, benötigt dieses besonders wenig Platz.

Eine weitere vorteilhafte Ausbildung des federnden Elementes ist dadurch gegeben, dass es zusätzlich mit der Nabe so zusammenwirkt, dass es als eine Überlastkupplung zwischen dem ersten Drehmomentübertragungsteil und der Nabe wirkt. Auf eine Dämpfung in einem nach dem ersten Drehmomentübertragungsteil angeordneten Planetengetriebe kann dann verzichtet werden.

Dadurch ist eine Begrenzung des maximal übertragbaren Moments durch den Startermotor möglich. Dies ist insbesondere dann von Vorteil, wenn es für den Startermotor zu einer sogenannten Stopschlag-Belastung kommt, weil beispielsweise die Brennkraftmaschine blockiert ist.

Um eine einfache und sichere Übertragung des Drehmoments vom Startermotor auf das erste Drehmomentübertragungsteil zu erhalten, ist das Federelement mit dem Startermotor formschlüssig verbunden.

Eine Begrenzung der Belastung des Federelements ist beispielsweise dadurch möglich, dass die Startermotorwelle oder das mit dieser verbundene Federelement zwischen zumindest zwei Anschlägen verdrehbar ist. Eine besonders einfache Gestaltung der Anschläge ist dadurch gegeben, dass diese an der hohlen Welle angeordnet sind. Dabei wird ein Anschlag durch eine Einprägung der Welle von außen erreicht.

### Zeichnungen

Die Erfindung wird nachstehend in mehreren Ausführungsbeispielen anhand der zugehörigen Zeichnungen näher erläutert. Es zeigen:
Figur 1 einen Längsschnitt durch einen Startermotor einer erfindungsgemäßen Startvorrichtung;
Figur 2 einen Querschnitt durch eine Welle-Nabe-Verbindung entlang der Linie II-II in Figur 1;
Figur 3 einen Querschnitt durch eine Anschlagbegrenzung entlang der Linie III-III in Figur 1;
Figur 4 einen Längsschnitt durch ein zweites Ausführungsbeispiel des Startermotors der erfindungsgemäßen Startvorrichtung;
Figur 5 einen Ausschnitt aus einem Querschnitt aus der Figur 4 entlang der Linie V-V in Figur 4;
Figur 6 ein drittes Ausführungsbeispiel des Startermotors der erfindungsgemäßen Startvorrichtung;
Figur 7 ein viertes Ausführungsbeispiel des Startermotors der erfindungsgemäßen Startvorrichtung,
Figur 8 ausschnittweise eine axiale Sicherung der Ritzelwelle aus Figur 4.

Identische beziehungsweise gleichwirkende Bauteile sind mit gleichen Bezugszahlen bezeichnet.

### Beschreibung der Ausführungsbeispiele

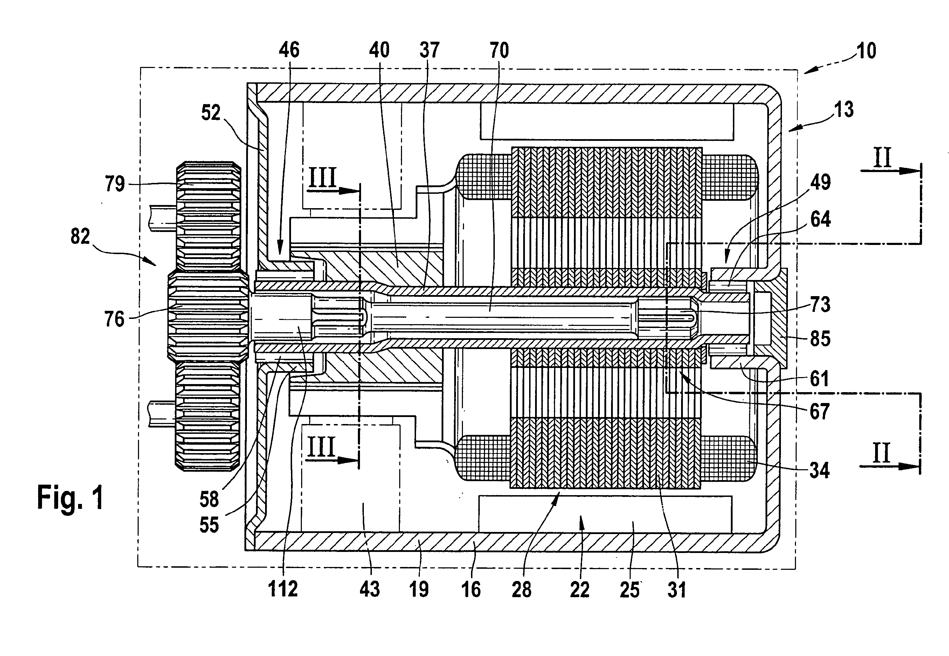

In Figur 1 ist ein erstes Ausführungsbeispiel einer erfindungsgemäßen Startvorrichtung 10 mit einem Startermotor 13 dargestellt. Der Startermotor 13 hat ein Polrohr 16, das Teil eines topfförmigen Polgehäuses 19 ist. Das Polrohr 16 bildet den magnetischen Rückschluß für den Startermotor 13. Innerhalb des Polrohrs 16 ist ein Stator 22 angeordnet, der aus Einzelpolen 25 besteht. Der Stator 22 umgibt einen Rotor 28, der aus einem Rotorblechpaket 31 mit einer Rotorwicklung 34 besteht. Das Rotorblechpaket 31 ist mit der Rotorwicklung 34 auf einer Rotorwelle 37 befestigt. Auf der Rotorwelle 37 ist weiterhin ein Kommutator 40 befestigt, über den die Rotorwicklung 34 mittels angedeuteter Bürsten 43 bestrombar ist. Durch Schließen eines nicht dargestellen Startschalters ist ein Stromkreis des Startermotors 13 beziehungsweise des Rotors 28 mit einer ebenso nicht dargestellten Spannungsquelle verbindbar, wodurch der Startermotor 13 einschaltbar ist. Der Rotor 28 ist über die Rotorwelle 37 in zwei Lagern 46 und 49 drehbar gelagert. Das topfförmige Polgehäuse 19 ist durch einen Lagerdeckel 52 geschlossen. Der Lagerdeckel 52 weist zur Rotorwelle 37 hin einen Kragen 55 auf. Innerhalb des Kragens 55 erstreckt sich die Rotorwelle 37 derart, dass zwischen dem Kragen 55 und der Rotorwelle 37 ein Wälzlager 58 als Lager 46 angeordnet ist. Wie der Lagerdeckel 52 weist auch das topfförmige Polgehäuse 19 einen Kragen 61 auf, innerhalb dessen sich die Rotorwelle 37 ebenso erstreckt. Zwischen dem Kragen 61 und der Rotorwelle 37 ist ebenso wie beim Lager 46 ein Wälzlager 64 als Lager 49 angeordnet.

Die Rotorwelle 37 hat eine Nabe 67, in der ein federndes Element 70 in Form eines Torsionsstabes befestigt ist. Das federnde Element 70 ist über ein Antriebsteil 73 in der Nabe 67 befestigt. Am federnden Element 70 ist abtriebsseitig ein erstes Drehmomentübertragungsteil 76 in Form eines Ritzels angeordnet. Dieses erste Drehmomentübertragungsteil 76 überträgt ein Drehmoment vom Startermotor 13 auf ein nachgeordnetes Übertragungselement 79, hier beispielhaft als Planetengetriebe 82 ausgebildet.

Der Kragen 61 bedingt, dass das topfförmige Polgehäuse 19 im Bereich des Lagers 49 eine Öffnung aufweist. Damit in diese Öffnung keine festen oder flüssigen Stoffe eindringen können, die das Lager 49 und den Startermotor 13 schädigen können, ist die Öffnung durch einen Verschluß 85 geschlossen.

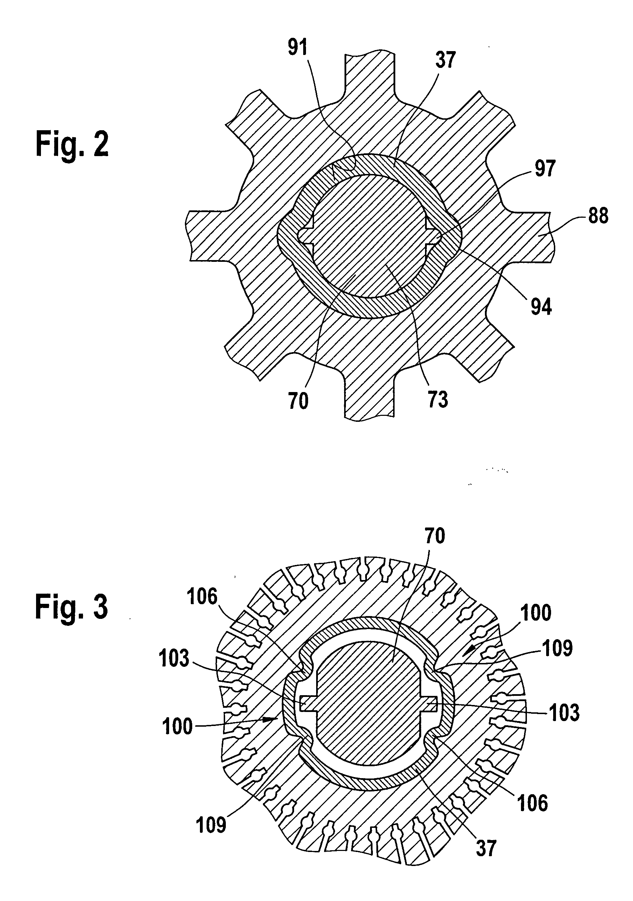

In Figur 2 ist ein Querschnitt gemäß der in Figur 1 angegebenen Schnittlinie II-II durch die Nabe 67 und das Antriebsteil 73 dargestellt. In Figur 2 ist eine axiale Ansicht auf eine Rotorlamelle 88 gegeben, die mit weiteren Rotorlamellen 88 schließlich das Rotorblechpaket 31 bilden. Die Rotorlamellen 88 haben eine zentrale Öffnung 91, in die die Rotorwelle 37 kraftschlüssig eingepreßt ist. Die zentrale Öffnung 91 der Rotorlamellen 88 hat an ihrem Umfang zwei Nuten 94, die sich in axialer Richtung erstrecken. Im Beispiel liegen sich die Nuten 94 in der zentralen Öffnung 91 gegenüber. Die Rotorwelle 37 ist, wie hier deutlich erkennbar ist, als Hohlwelle ausgeführt. Das als Torsionsstab ausgebildete federnde Element 70 ist mit seinem nabenseitigen Antriebsteil in die Rotorwelle 37 eingepreßt. An dieser Verbindungsstelle zwischen dem federnden Element 70 und der Rotorwelle 37 hat das federnde Element 70 leistenförmige Formschlußelemente 97, die im Beispiel am Umfang des federnden Elements 70 gegenüberliegend angeordnet sind. Durch das Einpressen des federnden Elements 70 in die Rotorwelle 37 bei gleichzeitiger Ausrichtung der leistenförmigen Formschlußelemente 97 auf die Nuten 94 der Rotorlamellen 88 ist ein lokales Verdrängen von Rotorwellenmaterial durch die leistenförmigen Formschlußelemente 97 in die Nuten 94 möglich. Durch dieses verdrängte Material der Rotorwelle 37 in die Nuten 94 ergibt sich zwischen den Rotorlamellen 88 und der Rotorwelle 37 nicht nur eine kraftschlüssige Verbindung, sondern darüber hinaus eine formschlüssige Verbindung.

In Figur 3 ist ein Querschnitt gemäß der Linie III-III aus Figur 1 dargestellt. Während des Betriebs des Startermotors 13 wirken im Antriebsstrang zwischen einem Einspurritzel an einen Zahnkranz einer Brennkraftmaschine und dem Startermotor über den zeitlichen Verlauf eines Andrehvorgangs pulsierende Drehmomente. Durch diese Drehmomente, die auch zwischen dem ersten Drehmomentübertragungsteil 76 und dem Rotor 28 wirken, wird das federnde Element 70, hier insbesondere als Torsionsstab ausgebildet, auf Verdrehung beansprucht. Damit die Auslenkung der Verdrehung zwischen federndem Element 70 und der Rotorwelle 37 begrenzbar ist, ist zwischen dem federnden Element 70 und der Rotorwelle 37 ein Anschlagsystem 100 angeordnet. Das Anschlagsystem 100 besteht aus einer Leiste 103, die an dem federnden Element 70 angeformt ist. Die Leiste 103 ist in der Rotorwelle 37 bei Torsion des federnden Elementes 70 relativ zur Rotorwelle 37 drehbar. Eine Verdrehung der Leiste 103 wird begrenzt durch zwei Anschläge 106 und 109, die an der Rotorwelle 37 angeformt sind und einander gegenüberliegend angeordnet sind. Die Anschläge 106 und 109 an der Rotorwelle 37 sind durch Einprägen gefertigt. Würde man am Umfang der Rotorwelle 37 nur ein Anschlagsystem 100 verwenden, ergäbe sich bei Drehmomentbelastung des federnden Elements 70 eine Verlagerung des federnden Elements 70 aus der Mittel- und Ideallage. Aus diesem Grund ist das Anschlagsystem am Umfang der Rotorwelle 37 mindestens zweimal vorhanden.

Durch die eingeprägten Anschläge 106 und 109 ist der Außenumfang der Rotorwelle 37 nicht mehr kreisrund, so dass dieser dazu verwendet werden kann, einen formschlüssigen Sitz des Kommutators 40 auf dem Umfang der Rotorwelle 37 zu erhalten. Dieser Formschluß zwischen der Rotorwelle 37 und dem Kommutator 40 führt dazu, dass zunächst einmal die Position des Kommutators 40 zur Rotorwelle 37 eindeutig bestimmt ist. Führt man zwischen den Rotorlamellen 88 beziehungsweise dem Rotorblechpaket 31 und der Rotorwelle 37, wie zu Figur 2 beschrieben, ebenso einen eindeutigen Formschluß herbei, so ergibt sich eine eindeutige winkelbezogene Zuordnung zwischen dem Kommutator 40 und dem Rotor 28 beziehungsweise dessen Rotorblechpaket 31. Durch diese eindeutige Zuordnung zwischen Kommutator 40 und Rotorblechpaket 31 ist es möglich, die toleranzbedingten Fertigungseinflüsse auf die Kennlinien beziehungsweise auf Kennlinienveränderungen des Startermotors 13 deutlich zu reduzieren.

Das federnde Element 70 ist im Prinzip fliegend gelagert. Einerseits ist das Antriebsteil des federnden Elements 70 in der Nabe 67 formschlüssig eingepreßt. Andrerseits ist das Ende des federnden Elements 70, das dem ersten Drehmomentübertragungsteil 76 zugewandt ist, zwar in seiner axialen Lage bestimmt, durch eine Spielpassung zwischen einem Absatz 112 und dem Innendurchmesser der Rotorwelle 37 an dieser Stelle ergibt sich jedoch eine mit Radialspiel behaftete Lagerung. Durch diese mit Radialspiel behaftete Lagerung des federnden Elements 70 in der Rotorwelle 37 im Bereich des ersten Drehmomentübertragungsteils 67, ergibt sich eine weitgehende Entkopplung des Rotors 28 von radialen Anregungen. Dies hat vorteilhafte Auswirkung auf den Verschleiß der Bürsten 43. Darüber hinaus ist die Geräuschanregung aus der Verbindung des ersten Drehmomentübertragungsteils 67 mit einem nachgeordneten Übertragungselement 79 durch die radial nachgiebige Anbindung des ersten Drehmomentübertragungsteils 76 verringert.

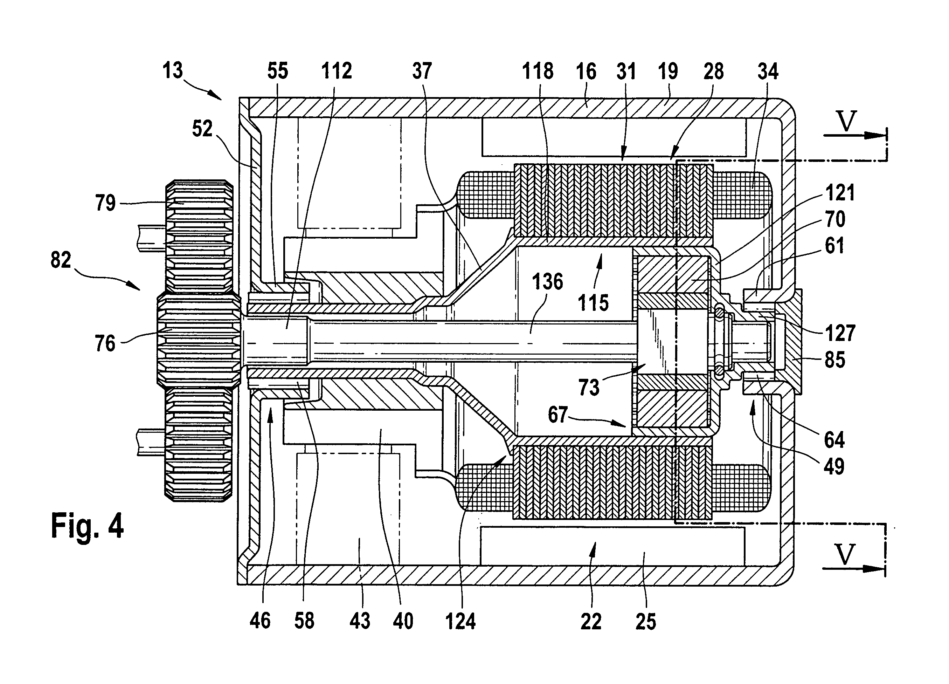

In Figur 4 ist ein zweites Ausführungsbeispiel des Startermotors 13 der erfindungsgemäßen Startvorrichtung 10 dargestellt. Die Rotorwelle 37 ist ebenso als Hohlwelle ausgeführt. Im Unterschied zum ersten Ausführungsbeispiel weist die Rotorwelle 37 nunmehr einen aufgeweiteten Wellenabschnitt 115 auf. Auf der Außenseite dieses aufgeweiteten Wellenabschnittes 115 ist wiederum das Rotorblechpaket 31 mit seinen Rotorlamellen 88 angeordnet. Die Rotorwelle 37 besteht hier aus zwei Wellenteilen 118 und 121, die ineinander gesteckt sind. Auf das Wellenteil 118 ist das bereits erwähnte Rotorblechpaket 31 bis zu einem Anschlag 124 aufgeschoben, wodurch die Lage des Rotorblechpakets 31 in eine Richtung bestimmt ist. In den aufgeweiteten Wellenabschnitt 115 des Wellenteils 118 ist das Wellenteil 121 eingeschoben. An seinem vom Wellenteil 118 weg weisenden Ende hat das Wellenteil 121 eine zylinderringförmige Schulter 127, auf deren Außenseite das Wälzlager 64, wie bereits im ersten Ausführungsbeispiel angeordnet ist. Das Wälzlager 64 stützt sich ebenfalls am Kragen 61 ab. Das Wellenteil 121 ist in das Wellenteil 118 eingeschoben und wird dabei formschlüssig drehfest miteinander verbunden. Radial innerhalb des Wellenteils 121 ist das ringförmige federnde Element 70 angeordnet.

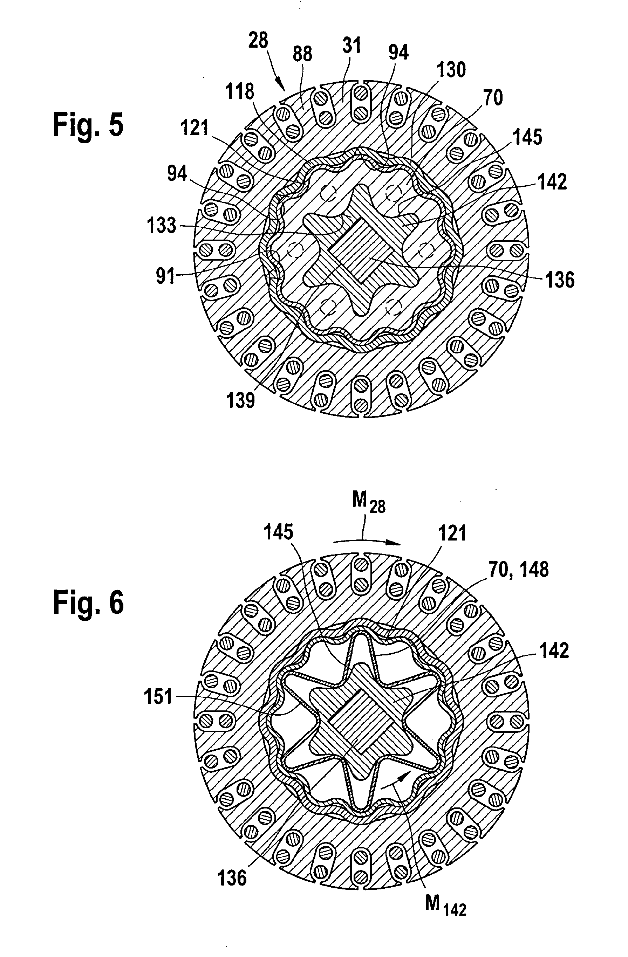

In Figur 5 ist ein Querschnitt durch die Nabe 67 gemäß der Linie V-V dargestellt. Wie bereits im ersten Ausführungsbeispiel, weisen die Rotorlamellen 88 an ihrer radial nach innen gerichteten Kontur Nuten 94 auf. Im Unterschied zum ersten Ausführungsbeispiel ist diese Innenkontur insgesamt wellenförmig. An diese wellenförmige Innenkontur ist die Außenkontur des Wellenteils 118 angepaßt, so dass Erhebungen 130 in die wellenförmige Innenkontur, insbesondere in die Nute 94, eingreifen, so dass sich eine formschlüssige Verbindung zwischen der Rotorwelle 37 beziehungsweise dem Wellenteil 118 und dem Rotorblechpaket 31 ergibt. Dadurch, dass die Rotorwelle 37 beziehungsweise die beiden Wellenteile 118 und 121 aus einem Blechteil mit konstanter Dicke bestehen, ergibt sich an der Innenseite des Wellenteils 118 wiederum eine gewellte Innenkontur. In diese gewellte Innenkontur des Wellenteils 118 ist das Wellenteil 121, das ebenso eine gewellte Außenkontur aufweist, formschlüssig eingeschoben. An die damit ebenso wellenförmige Innenkontur des Wellenteils 121 ist eine Außenkontur des federnden Elements 70 angepaßt. Das federnde Element 70 mit seiner Ringform hat eine im Wesentlichen sternförmige Ausnehmung 133. In die hohle Rotorwelle 37 ist eine Ritzelwelle 136 eingesetzt. Die Ritzelwelle 136 hat an ihrem ersten Ende das erste Drehmomentübertragungsteil 76 und an ihrem anderen Ende ist das Antriebsteil 73 angeordnet, das ein Vielkantprofil 139 hat. Auf dieses Vielkantprofil 139 ist ein sternförmiger Mitnehmer 142 befestigt. Dieser sternförmiger Mitnehmer 142 hat eine nach innen gerichtete Innenkontur, die dem Vielkantprofil 139 entspricht. Die Außenkontur des sternförmigen Mitnehmers entspricht der sternförmigen Ausnehmung 133 des federnden Elements 70.

Wirkt bei einer derartigen Anordnung im Starterbetrieb ein nicht konstantes Drehmoment, so ermöglicht das federnde Element 70 ein Abmildern der Drehstöße zwischen der Rotorwelle 37 mit seinem Rotorblechpaket 31 und der Ritzelwelle 136. Durch die Anlage des elastischen Elements 70 an einer Zahnflanke 145 wird dieses durch den sternförmigen Mitnehmer an die Innenkontur des Wellenteils 121 gedrückt und komprimiert. Dadurch, dass dieses federnde Element 70 eine Dämpfungskomponente aufweist, werden beim Zurückfedern somit die Schwingungen verringert und dadurch Stöße im Antriebsstrang zwischen dem Rotor und dem ersten Drehmomentübertragungsteil 76 beziehungsweise dem nachgeordneten Übertragungselement 79 gemildert.

In Figur 6 ist ein drittes Ausführungsbeispiel für das federnde Element 70 dargestellt. Dieses federnde Element 70 ist hierbei als mäanderförmige Blattfeder 148 ausgebildet und hat ebenso eine im Wesentlichen ringförmige Form. Werden nunmehr der sternförmige Mitnehmer 142 und das Wellenteil 121 gegeneinander relativ gedreht, beispielsweise unter der Belastung eines Rotormoments M₂₈, dem ein Gegendrehmoment M₁₄₂ entgegenwirkt, so schmiegt sich das Blattfederteil 151 an die Zahnflanke 145 an. Durch dieses Anschmiegen dieses Blattfederteils 151 an die Zahnflanke 145 bei geeigneter Abstimmung der einzelnen mäanderförmigen Blattfedern 148 ist durch die elastische Kopplung zwischen Antriebsstrang und Rotor 28 eine Verringerung der Belastungsspitzen im Antriebsstrang erreichbar. Durch die Gestaltung der Zahnflanke 145 am sternförmigen Mitnehmer 142 läßt sich der Kraftverlauf über dem Drehwinkel und damit die Biegebeanspruchung des Federelements in vorteilhafter Weise steuern.

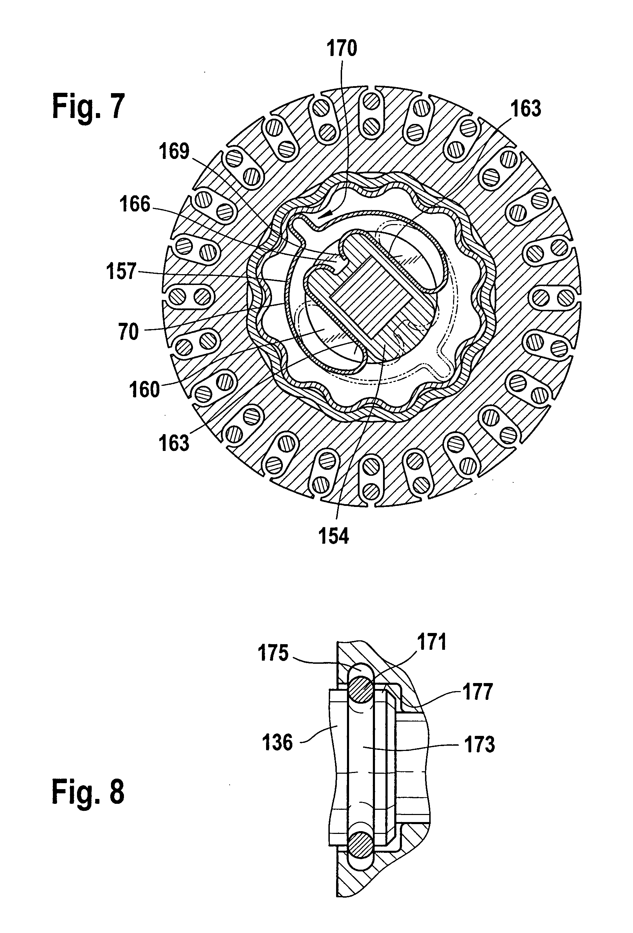

In Figur 7 ist ein weiteres Ausführungsbeispiel für das federnde Element 70 dargestellt. In diesem Fall bilden ein Mitnehmer 154, eine Schlingfeder 157 und die wellenförmige Innenkontur des Wellenteils 121 zusammen eine Überlastkupplung. Auch hier ist bei Überlastung Überspringen um eine oder mehrere Teilungen möglich. Der Mitnehmer 154 erstreckt sich im Wesentlichen in axialer Richtung in Zylinderform. An dem axialen Bereich, an dem die Schlingfeder 157 angeordnet ist, weist dieser Mitnehmer 154 zwei sich jeweils gegenüberliegende und gleich große segmentartige Ausnehmungen 160 auf. Durch diese segmentartigen Ausnehmungen 160 ergeben sich zwei parallele Sekantenflächen 163. Parallel zu den Sekantenflächen und senkrecht zur Oberfläche des Mitnehmers 154 ist ein Sackloch 166 ausgenommen. Der Übergang vom Sackloch 166 zu den beiden Sekantenflächen 163 ist verrundet.

Die Schlingfeder 157 weist zwei Enden 169 auf, die beide im Sackloch 166 angeordnet sind. Ausgehend von einem Schlingfederende 169 wird nunmehr der Verlauf der gesamten Schlingfeder 157 beschrieben. Die im Sackloch 166 beginnende Schlingfeder 157 schmiegt sich zunächst entlang der Verrundung zwischen dem Sackloch 166 und einer Sekantenfläche 163 an und verläuft entlang einer der Sekantenflächen 163, bis zu dem Bereich, in dem die Sekantenfläche 163 wieder in den zylindrischen Bereich des Mitnehmers 154 übergeht. Die Schlingfeder 157 verläuft nunmehr in einem vom Mitnehmer 154 weg weisenden Bogen um den Mitnehmer 154 herum, um schließlich im Bereich gegenüber dem Sackloch 166 sich nach radial auswärts, das heißt zur wellenförmigen Innenkontur des Wellenteils 121 hin, zu wenden. Kurz bevor die Schlingfeder sich mit ihrem im Wesentlichen radial erstreckenden Bereich die wellenförmige Innenkontur des Wellenteils 121 erreicht, ist diese so U-förmig gebogen, dass der U-Bogen an die wellenförmige Innenkontur des Wellenteils 121 angepaßt ist und einen U-förmigen Bogenzapfen 170 bildet. Betrachtet man nunmehr in einer Normallage die Schlingfeder 157, das heißt der U-förmige Bogen der Schlingfeder und das Sackloch 166 stehen sich gegenüber, so bildet eine Gerade durch den Mittelpunkt des Mitnehmers 154 durch das Sackloch 166 zum U-förmigen Bogenzapfen 170 eine Symmetrielinie für die Schlingfeder.

Während die Schlingfeder 157 innerhalb der segmentartigen Ausnehmung 160 eine dieser angepaßte Breite hat, ist die Breite der Schlingfeder 157 außerhalb der segmentartigen Ausnehmung 160 breiter als diese. Wirkt nunmehr zwischen dem Mitnehmer 154 und dem Rotor 28 ein Drehmoment, so führt dies zu einer Verwindung beziehungsweise Verbiegung der Schlingfeder 157, so dass sich schließlich die freie Außenkontur der Schlingfeder 157 an den im Wesentlichen zylinderförmigen Mitnehmer 154 anschmiegt. Je nachdem wie die im Wesentlichen zylinderförmige Außenkontur verläuft, kann der Momentenverlauf über dem Verdrehwinkel zwischen dem Mitnehmer 154 und dem Rotor 28 beeinflußt werden. Übersteigt schließlich das Drehmoment zwischen dem Mitnehmer 154 und dem Rotor 28 eine bestimmte Höhe, so kann zur Schonung des Triebstrangs der Startvorrichtung 10 beziehungsweise des Startermotors 13 der U-förmige Bogenzapfen 170 eine oder gar mehrere entsprechende Nuten in der Innenkontur des Wellenteils 121 weiterrutschen.

In Figur 8 ist ausschnittweise eine axiale Sicherung der Ritzelwelle 136 aus Fig. 4 dargestellt. Die Ritzelwelle 136 ist durch einen Federring 171 gesichert, der sowohl in eine Nut 173 auf der Ritzelwelle 136 eingreift, als auch in eine Nut 175 in einer Nabe 177 des Wellenteils 121. Zur Montage der Ritzelwelle 136 wird zunächst der Federring 171 in die Nut 175 eingesetzt. Anschließend wird die Ritzelwelle 136 in die Nabe 177 soweit eingeschoben, bis der Federring 171 in die Nut 173 der Ritzelwelle 136 einschnappt.

Wird die Welle 136 mit einer angefasten oder verrundeten Nut 173 ausgeführt, so ist eine zerstörungsfreie Demontage möglich.

Der Vielkantprofil 139 kann alternativ auch durch ein verrundetes Polygonprofil ersetzt werden, so dass eine Kerbwirkung in sternförmigen Mitnehmer 142 verringert ist.

## Patentansprüche

1. Startvorrichtung zum Andrehen von Brennkraftmaschinen, mit einem Startermotor (13) gebildet aus einem Stator (22) und einem Rotor (28) und einem ersten Drehmomentübertragungsteil (76), das mit dem Startermotor (13) verbunden ist, zum Übertragen eines Drehmoments auf mindestens ein nachgeordnetes Übertragungselement (79), **dadurch gekennzeichnet, dass** zwischen dem Rotor (28) und dem ersten Drehmomentübertragungsteil (76) zumindest ein federndes Element (70) angeordnet ist.

2. Startvorrichtung nach Anspruch 1, **dadurch gekennzeichnet, dass** das zumindest eine federnde Element (70) in einer Nabe (67) zwischen dem Startermotor (13) und dem ersten Drehmomentübertragungsteil (76) angeordnet ist.

3. Startvorrichtung nach Anspruch 2, **dadurch gekennzeichnet, dass** eine Rotorwelle (37) oder ein mit dieser verbundenes Nabenteil (121) die Nabe (67) bildet.

4. Startvorrichtung nach Anspruch 3, **dadurch gekennzeichnet, dass** die Rotorwelle (37) eine Hohlwelle ist.

5. Startvorrichtung nach Anspruch 3 oder 4, **dadurch gekennzeichnet, dass** das zumindest eine federnde Element (70) zumindest teilweise innerhalb der Rotorwelle (37) gelagert ist.

6. Startvorrichtung nach einem der vorhergehenden Ansprüche, **dadurch gekennzeichnet, dass** das zumindest eine federnde Element (70) ein Torsionsstab ist.

7. Startvorrichtung nach Anspruch 6, **dadurch gekennzeichnet, dass** das als Torsionsstab ausgebildete federnde Element (70) mit dem Drehmomentübertragungsteil (76) eine vorgefertigte Baugruppe bildet.

8. Startvorrichtung nach einem der Ansprüche 1 bis 5, **dadurch gekennzeichnet, dass** das zumindest eine federnde Element (70) im wesentlichen ringförmig ist.

9. Startvorrichtung nach einem der Ansprüche 2 bis 7, **dadurch gekennzeichnet, dass** die Nabe (67) mit dem federnden Element (70) als eine Überlastkupplung zusammenwirkt.

10. Startvorrichtung nach einem der vorhergehenden Ansprüche, **dadurch gekennzeichnet, dass** das federnde Element (70) mit dem Startermotor (13) formschlüssig verbunden ist.

11. Startvorrichtung nach einem der Ansprüche 3 bis 9, **dadurch gekennzeichnet, dass** die Rotorwelle oder das mit dieser verbundene federnde Element (70) zwischen zumindest zwei Anschlägen (106, 109) verdrehbar ist.

12. Startvorrichtung nach Anspruch 11, **dadurch gekennzeichnet, dass** die zumindest zwei Anschläge (106, 109) an der Rotorwelle (37) angeordnet sind.

13. Startvorrichtung nach einem der vorhergehenden Ansprüche, **dadurch gekennzeichnet, dass** das federnde Element eine Dämpfungskomponente aufweist.
